(19) **Europäisches Patentamt / European Patent Office / Office européen des brevets**

(11) **EP 3 504 506 B1**

(12) # EUROPEAN PATENT SPECIFICATION

(45) Date of publication and mention
of the grant of the patent:
**25.09.2019 Bulletin 2019/39**

(51) Int Cl.:
**F41J 5/08** *(2006.01)*    **F41J 5/06** *(2006.01)*

(21) Application number: **16787552.5**

(22) Date of filing: **27.09.2016**

(86) International application number:
**PCT/IB2016/001368**

(87) International publication number:
**WO 2018/060752 (05.04.2018 Gazette 2018/14)**

(54) **TARGET**

ZIEL

CIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.07.2019 Bulletin 2019/27**

(73) Proprietor: **Tacticaltrim e.K.**
**12107 Berlin (DE)**

(72) Inventors:
• **HERRMANN, Marco**
**12357 Berlin (DE)**

• **STUTTE, Sebastian**
**12107 Berlin (DE)**
• **KEIL, Martin**
**2026 WE Haarlem (NL)**

(74) Representative: **Castell, Klaus**
**Patentanwaltskanzlei**
**Liermann-Castell**
**Am Rurufer 2**
**52349 Düren (DE)**

(56) References cited:
**EP-A1- 2 040 025      WO-A1-2011/035363**
**US-A1- 2013 147 117**

**Description**

The invention concerns a target comprising at least one dummy depicting at least one part of the human body.

A target of the known art is disclosed in EP 2 040 025 A1.

For training snipers of the police, the Bundeswehr and of special forces units it is known to employ targets in form of a human silhouette. These are usually made of metal or cardboard and move on tracks or attached to wires through a simple scenario of a simulated crime scene. In the process, it is important for the sniper not to permit a distraction by the multitude of impressions from the simulated situation and to lock on and hit the target in a very short time. Among other reasons, the silhouette depicting a human is used to train how the silhouette of the simulated target person has been hit since in a real situation, the task of a sniper can change within fractions of a second. If the situation initially only demands to stop a perpetrator, so that he cannot cause further damage or physical injury, it might become suddenly necessary within fractions of a second to fire the so called "final shot to save lives". This "aimed lethal use of firearms by police officers in terms of emergency relief" is to be used to avert threats to third parties if and only if no other means are available. To stop a perpetrator, aimed shots are tested, which are tending to preferably immobilize the target person without killing her or without injuring her causing permanent and serious physical damage. In such a situation, it is demanded of the sniper to survey the overall situation, simultaneously to lock on the target person and to take the ethically difficult decision between a man stopping shot and if applicable a final shot to save lives within fractions of a second. To practice this situation, metal- or cardboard targets running through the simulated scenario at a shooting range are not sufficient. The metal- or cardboard targets are predictable and hardly cause other effects than surprise by sudden folding up or movement.

To create simulated combat- or crime situations for simulations more realistically, it has been known to drive dummies mounted on an armoured small vehicle through a scenario. The small vehicle can be remotely controlled by the instructor and even autonomous systems are known already, that move through a simulated fighting scenario independently. The autonomously moving dummies have a more realistic effect for the sniper from a distance, which is also helpful for the training of the emotional pressure besides the physical strain and the precise sighting and aiming.

With the international PCT-patent application WO 2011/035363 A1, a system for the training of armed personnel is revealed, where dummies are mounted on small vehicles, which are participants in a simulated fighting situation remotely controlled by a central control unit. These dummies are able to register with a suitable sensor system, if they have been hit or not.

Within the US-application 2014/0356817 A1 a system according to the abovementioned WO 2011/035363 A1 will be enhanced to the effect that the dummies moving on small vehicles through the simulated fighting scenario can react to the fighting incidents remotely controlled by a central server. That way it is possible to influence the actions of the dummies, in which the dummies are controlled by the central server, influencing the fighting.

The abovementioned dummies have the disadvantage, that they are less suitable for the initially mentioned training situation namely to take the decision within fractions of a second, if the target person simulated by the dummy has to be stopped or even has to be killed. Especially the situation cannot be simulated, that sets in when the target person simulated by the dummy is hit and on that account changes her behavior thus reacts especially aggressive or panic-fueled. It cannot be simulated that the person wounded by a bad hit might cause greater damages or personal injury than might have possibly happened before the hit. This highly dynamic and emotionally very much charged situation for all parties involved - including the sniper - can hardly be trained with a dummy just driving around. Also hostage situations, where the target person simulated by the dummy protects herself with a hostage, can hardly be simulated. Another situation is very difficult to train: when the target person simulated by the dummy drops her weapon for whatever reason. As soon as a target person is unarmed in real life, for instance the so called "final shot to save lives" is neither ethically justifiable nor legally permitted. So the short and possibly unexpected dropping of a weapon can change the entire fighting situation very suddenly and very much.

Therefore, it is the role of the invention to provide a target that permits direct conclusions about the quality of hits.

The task at the bottom of the invention is solved thus, that the dummy depicting at least one part of the human body comprises a plurality of sensors, which communicate with a sensor data evaluating apparatus for the registration of the sensors' data, provided that the sensor data evaluating apparatus determines by mathematical correlation of points in time of a maximum pressure (from) sensor data of the plurality of sensors the point of entry and the trajectory of a projectile penetrating the dummy. Further advantageous configurations are specified with in the sub-claims of claim 1.

So according to the invention it is planned to classify the point of entry or hit by a projectile. Thereby sensors shall be available which permit to determine the quality of hits. The point of entry and possibly the trajectory are counted among the quality of a hit. From historical field experience it is known, which kind of a hit on a hit person still permits which action. Thus it is known, that for instance a hit in the body area that did not pierce the lungs or the heart, permits the hit person - depending on her physique - to fire further aimed shots. A shot to the lung does not cause death directly, but the person hit is heavily restricted in her ability to still act. A shot to the heart causes unconsciousness almost immediately. In very special cases, for instance when the target person is holding a dead man's switch to still detonate an explosive device in case of her own death by releasing the dead man's switch, it is necessary to kill the target person in a cramped position by a hit to the cerebellum. Such a hit would permit potential victims in the periphery of the target person to save themselves by flight before the dead man's switch should trigger nevertheless.

So, the sensors of the dummy permit an evaluation of the hit and by using a model permit conclusions about which activities the target person can still perform after the concrete hit.

According to the invention, sensors shall measure a pressure pulse within the dummy and determine the maximum of the pressure pulse with a high resolution in terms of time in the range of microseconds or depending on the condition of the signal they shall determine the point in time of the first maximum of the pressure pulse. From the known three-dimensional location of the sensor and from the determined time, the point of entry on the dummy and, with a sufficient number of sensors, even the trajectory of the projectile can be determined.

During its life cycle, the dummy will be hit and penetrated by a plurality of projectiles. Depending on the individual hit, sensors can be hit as well. To avoid, that for instance the hit in an electrical feed line of a sensor disables the dummy, only in preferred embodiment of the invention it is provided for, that the plurality of sensors is even communicating wirelessly with the sensor data evaluating apparatus, like for instance by active or passive RFID transponder or communicate by a generic near field communication with the sensor data evaluating apparatus, like for instance by infrared communication or by radio communication. It is provided for, that for infrared- or radio communication or for communication by active transponder, the individual sensor has its own battery in form of a flat button cell. It is sufficient for a very special case of using active transponders, if the combination of sensor and transponder comprises a piezo element. The shot into the dummy with a projectile bearing a kinetic energy between 1 kJ and 50 kJ, transfers a significant amount of energy onto the dummy by striking the dummy in form of a pressure wave expanding through the dummy. This pressure wave can be utilized by the piezo element as a short impulse of energy to charge a capacitor containing just enough energy to send out its own identification code at the maximum of the pressure pulse. The sent identification code is thereafter received by a receiver within the dummy and the exact time is determined. In this way, the receiver collects a number of RFID identifiers in a very short time with a registered point in time each, whereby the various pairs of individual RFID identifier and individual point in time are suitable for the characterization of the hit.

To make the dummy operational again as quickly as possible after a training mission including a hit to a sensor, it is provided for that the sensors are sticking in the exterior skin of the dummy. Thereby the sensors shall show as little surface as possible to a projectile. To this it is provided for in further preferred embodiment of the invention, that the sensors are essentially designed flat or disk-shaped and are aligned radially in relation of the body axis of the dummy depicting at least one part of the human body, which implies are sticking with the small silhouette in a wall of the exterior skin of the dummy, whereby sensors identical among each other are preconfigured by color and shape for an easy exchange, so that a preconfigured sensor is only applicable at a point of the dummy pre-determined for the pre-configured sensor. So the sensors are put in slots and only show their smallest silhouette to the outside. Principally it is sufficient for a three-dimensional determination of the point of entry and the trajectory, if there are only three sensors within a small area of the dummy surface, within which the different sensors are located nearly the same level. From the data of the three sensors, the point of entry can be determined precisely within the local level. If four sensors are employed, it is also possible depending on the placement of the sensors, to deduce an approximate trajectory of the projectile. For the placement of the sensors it is helpful, if each location for placement has a predetermined form of an insertion slot and is preferably color-marked. For the quick change of the possibly hit sensors it is sufficient, to exchange sensors of for example type a, type b, type c or type d which are differentiated by their RFIDs. In an apparatus for the evaluation of the sensor data, RFID identification codes are deposited correspondingly, whereby the three-dimensional location of each RFID type, identifiable by the code, is deposited in the apparatus.

However, the quality of determination of the point of entry and the trajectory is connected to some insurmountable obstacles with a complex geometric figure in the shape of a human torso. Initially the expansion of the three-dimensional pressure wave follows the shape of the dummy. In case of the sensors being far apart from each other and being arranged for instance at the head and the abdomen of the dummy, it is not sufficient for the determination of the exact point of entry and trajectory to assume linear runtimes for the pressure wave. The pressure wave is reflected repeatedly in the interior of the dummy and so pressure wave echos of different orders (rise by one order per reflexion) form, whereby it becomes difficult to filter the pressure maximum significant for the evaluation from the pressure wave maxima and echoes. Therefore it is sensible to arrange the sensors in groups that are located close to each other, so that the initial pressure wave reaches all sensors of a group prior to an echo of the pressure wave. To circumvent the problem of the echo it has proven advantageous, if the dummy is filled with a gel. The gel, preferably with the consistency of paste-like lubricating grease or the consistency of undissolved soft soap, brings several benefits. First the absorption of kinetic energy from the projectile by the dummy is relatively high. In case the sensors a supplied with energy only by a piezo element, the gel filling results in a high energy transfer. The high energy transfer also results in a reliable detection of a hit to distinguish this way for instance a hit by a projectile from a violent collision of the dummy with another dummy or an obstacle. Besides, the gel with the said consistency acts highly dampening and helps to mask transversal waves against longitudinal waves. Since transversal waves have a different propagation speed within a three-dimensional medium than longitudinal waves, a dispersion of the pressure wave occurs within an undampened medium, like for instance air without gel filling, which complicates the signal evaluation. For like with a lightning during a thunderstorm, the dispersion leads to a signal with several pressure maxima in succession, which reach the detector repeatedly as pressure maximum, similar to an atmospheric thunder. Also, echos are suppressed by the gel and the pressure maximum of the first pressure wave can be determined better. Finally, the gel filling leads to a density of the dummy that is similar to that of an actual human. Thus the mechanical effect of the kinetic energy transfer to the dummy appears more real during observed events. Also, the projectile sound of the hit is similar as with a real hit. Last of all, the gel has the tendency to close itself after a hit. That way, the dummy can be hit several times without losing its function. The gel can consist of grease, of a soft wax that has been further softened with a solvent where appropriate, of soft soap but also of an acrylate gel or of gelatin. Finally, weakly crosslinked organic polymers welled in water are possible as gel filling as well.

The condition of the outer skin of the dummy has an influence on the measuring result of the sensors and the apparatus for the evaluation of the sensor data belonging to it. Besides, the condition of the outer skin of the dummy has an influence on the duration of the life cycle of the dummy. It would be ideal, if the dummy would close itself completely again after a hit. One can get close to this goal, by having the outer skin consist of polyurethane foam, which is compacted at the surface to a leathery or rubbery consistency and shows the hardness between soft rubber and hard rubber. It is also provided for in the preferred embodiment of the invention, that the dummy itself is consists of polyurethane foam, which is compacted at the outer surface so that the surface has a rubbery to leathery quality, whereby the locations for the placement of the sensors are buttonhole-like slots in the outer surface of the dummy, whose inner forms correspond to the outer form of a pre-configured sensor, whereby the buttonhole-like slots have preferably a color marking. The polyurethane foam is penetrated by the projectile and the leathery to rubbery skin, which covers the foam, seems to close itself after entry of the projectile. Actually however, the polyurethane foam is severed at the location of entry but the foam underneath the leathery to rubbery skin will be mechanically closed again by the elastic foam.

To train a special situation, where the target person represented by the dummy drops her weapon, no matter for what reason, it is provided in the preferred embodiment of the invention, an arm of the dummy depicting at least one part of the human body comprises a fixture for the mounting of objects, like for example a dummy weapon, approximately in the area of the hand mounted to the arm whereby the fixture for the mounting of objects can drop an object picked up before by remote triggering, whereby the fixture for the mounting of objects can be controlled remotely. So it is provided, that the arm of the dummy can hold a weapon in the hand or can carry a weapon in the crook of the arm. During a fight situation with the dummy it can be set than that the dummy drops the weapon randomly, by a controlled program or else by remote triggering by command of the training leader. This situation happens in reality as well. Even though the target person represented by the dummy does not reveal outwardly that it surrenders or gives up, it continues to act. It is possible, that the dropped weapon drops only accidentally. However, in this moment a shot aiming to kill would legally and ethically not be justifiable anymore. To train the sniper to recognize this situation and in doing so to aim and to observe the total situation is the subject matter of the exercise with such a dummy.

In preferred embodiment of the invention, the dummy shall not only be able to hold or drop a dummy weapon. Beyond that, it is provided in the embodiment of the invention, that an arm of the dummy depicting at least one part of the human body is movable motor driven, whereby the drive can be controlled remotely. Due to the raised arm an aiming by the dummy on the sniper can be simulated. To avoid, that the drive of the arm takes damage by firing at the dummy with projectiles, it can be provided for that the arm is driven by a rod gearing mechanism or by a rope pull from underneath the dummy shaped as a torso.

Besides the simulation of dropped weapon or of an arm lifted for aiming and / or shooting, an additional difficult situation for the sniper can be simulated with a further embodiment of the invention, that is to say when the target person represented by the dummy abuses a hostage as a human shield. In the simplest case it can be provided that an additional, second dummy depicting at least one part of the human body, in the simplest case in form of a silhouette target, is positioned related to the first dummy behind or in front of the first dummy on the movable target, which for instance is movable motor driven by a lever or by a scissor gear, so that the first and the second dummy can either overlap or be positioned offset to each other whereby the drive can be controlled remotely.

If the dummy shall be mobile as well, the drive of the dummy gains a special importance. The dummy can be mounted on an armored small vehicle, be moved on two robotic legs running autonomously or be set on two wheels arranged on one axle (single-axle vehicle), whereby an electronic straightening apparatus keeps the dummy always in balance. So it is provided only in preferred embodiment of the invention, that the apparatus for unbound movement across a terrain is a three- or four-wheeled, armored small vehicle, an armored vehicle (single-axle vehicle) with two wheels arranged parallel on one axle with a straightening apparatus or an apparatus resembling two human legs, whereby the apparatus with the two legs performs humanoid motion for movement. The different drives have different advantages and disadvantages. It is advantageous with the armored small vehicle driving on three or four wheels, that it can hold a battery with a high charge and needs comparatively little energy for movement. However, such a dummy is not very maneuverable afield and cannot drive over small obstacles easily anymore. In closed buildings such a small vehicle is not maneuverable enough. The autonomous, robotic legs are extremely all-terrain and there are controllers in existence already, that are able to move such robotic legs almost as fast as the real human and to move almost as stable. However, at the date of this application, this technology is still very expensive and vulnerable and hard to armor, so that ricochets or unwanted hits in the leg section of the dummy could destroy the dummy. Finally the single-axle vehicle is possible as a drive, which is very maneuverable and needs little space. It is disadvantageous with this drive that the dummy sways back and forth when turning, which leads to an unnatural movement pattern of the dummy.

In preferred embodiment of the dummy according to the invention as a movable target it is provided for, that a control unit present with the within the target controls the unbound movement across a terrain, and/or the arm of the dummy, and or the fixture for the mounting of objects, whereby the control unit disposes of a pre-set repertoire of motion patterns, which externally conform to the body language of typical emotions during a combat situation, like for instance a resting position to remain unrecognized, panic, aggression or flight, whereby the control unit is connected to additional, movable targets wirelessly through a central command device (client-server) or directly (peer-to-peer), whereby in case of a hit by a projectile with predetermined parameters, like for instance a computed lethal shot, a computed man-stopping shot, a computed shot lethal with delay, the central control unit communicates the result of its own computations to the additional movable targets identical or similar in construction, based on which the additional movable targets show a changed motion pattern.

This kind of interaction by different movable targets identical in construction or similar in construction makes it possible to train, that a situation apparently quiet outwardly is very fast and dynamically variable. Thus it can be trained for instance, that in case of a shot panic erupts among a group of dummies. Previously calm appearing dummies aimed for by the sniper, suddenly move, lose weapons, others raise their weapons and change their direction of movement. In such an situation, in which also target persons portrayed as dummies peek out from behind a hostage, stand for a demanding training situation for the trainee that can compete with real situations.

The invention will be explained by means of the following illustrations. They show:

Fig. 1    a movable target from state-of-the-art,

Fig. 2    another movable target from state-of-the-art,

Fig. 3    a movable target according to the invention in a first embodiment,

Fig. 4    the torso of the movable target according to the invention with display of the placement of individual sensors,

Fig. 4a    sensors with different shapes for the use at predetermined sections of the torso from Illustration 4,

Fig. 5    display of a sagittal section through the torso,

Fig. 6    a torso opened by a sagittal section with folded out torso halves,

Fig. 6a    outlining of a point of entry into a torso, displayed on one of the torso halves,

Fig. 6b    display of pressure pulse signals of different sensors attached to the torso,

Fig. 6c    drawing for clarification of the computation of the point of entry from sensor data,

Fig. 7    display of a movable target on an armored small vehicle,

Fig. 8    display of a movable target on autonomously walking, robotic legs,

Fig. 9    display of a movable target on a single-axle vehicle with electronic straightening apparatus,

Fig. 10    display of a movable target with a second dummy displayed as a hostage,

Fig. 11    display of a movable target with a second dummy displayed as a hostage, the target person displayed as a dummy peeking out behind the hostage,

Fig. 12    display of a movable target with a second dummy displayed as a hostage, the target person displayed as a dummy, that is holding a weapon,

Fig. 13    display of a movable target with a second dummy displayed as a hostage, the target person displayed as a dummy, that has dropped a weapon.

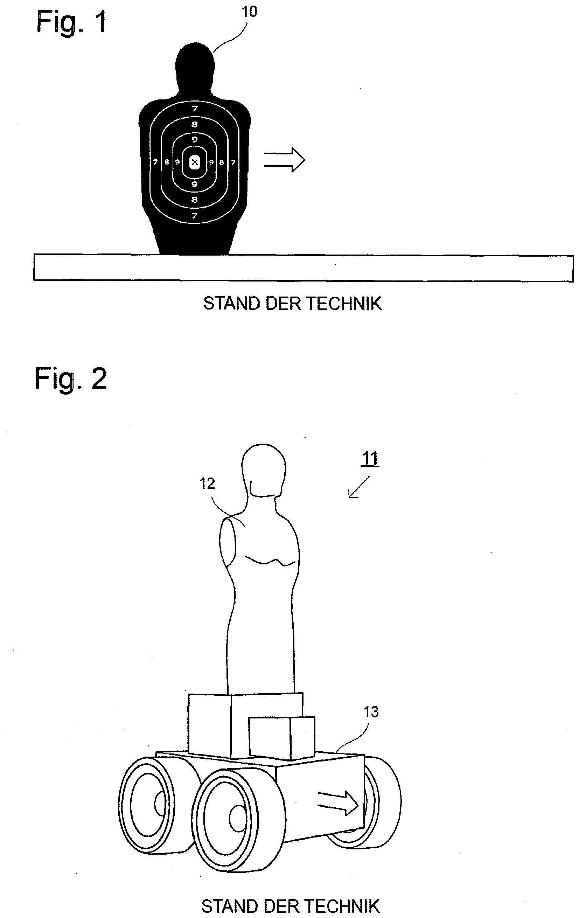

In **figure 1** a movable target 10 from the state-of-the-art is displayed, which is taking its path from left to right as a metal- or cardboard target with a silhouette of a human and in doing so can fold up from the back or can fall down to the back. For a sniper, who has to train in dynamic / highly dynamic situations, this kind of movable targets are predictable, boring and offer a surprise effect only by folding up and falling down to the back.

In **figure 2** a movable target 11 from the state-of-the-art is displayed, which is mounted as a three-dimensional torso 12 on an armored small vehicle. The armored small vehicle 13 is remotely controllable and is controlled by a central computer that can also control complex patterns of movement with a dynamic adjustment to external events with an appropriate program. The torso 12 has sensors not shown here, which can detect a hit qualitatively, if it was a hit or not. The kind of hit cannot be analyzed in real time or close to real time.

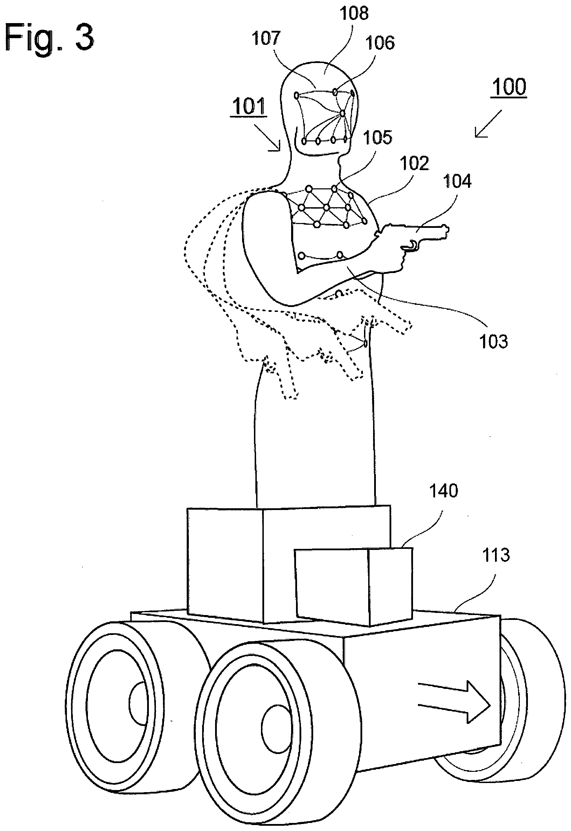

**Figure 3** eventually shows a first design variant of a movable target 100 according to the invention, which is structured as well as a torso 102 with a head 108 placed on top mounted on an armored small vehicle 113. As a special feature, the mounted torso 102 exhibits a movable right arm 103 holding a dummy weapon 104 with the hand. By a programmed rising of the hand with the weapon, this movable target can simulate an attack by a target person, to which the sniper has to react adequately. In further design variants of the movable target according to the invention it is provided for, that the arm 103 can shoot up to simulate a surrendering target person. Besides the arm 103, there are sensors 105 in the face area and sensors 106 in the chest area of the torso 102 which are outlined here as a grid 107 for clarification of the geometric cross-linking between them. By means of sensors 105 and 106, which detect primarily a pressure pulse of a pressure wave, the point of entry and when applicable the trajectory of the projectile hitting the movable target 100 are determined. The number of sensors 105, 106 can be 3 to 4 but also 10 or 20 and more depending on the demanded precision of the analysis of the point of entry and the trajectory. The more sensors 105, 106 are installed, the shorter is the life cycle of the dummy 101 due to a probable hit by a projectile.

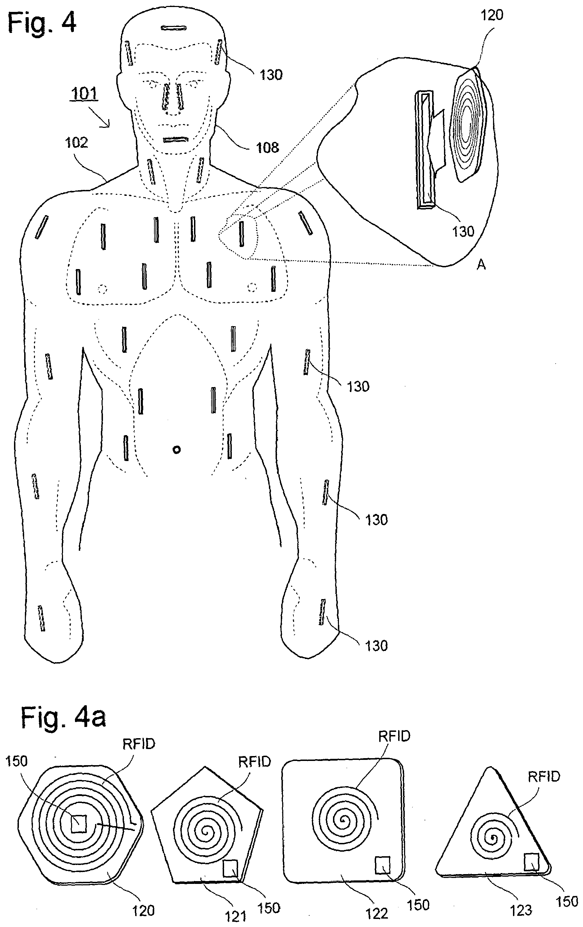

In **figure 4** exemplary positions of sensors within the dummy 101 consisting of torso 102 and head 108 are displayed, into which sensors 120, 121, 122 and 123 individualized by their form and color scheme can be inserted. It is provided for, that sensors of a predetermined type with a predetermined identification number can only be inserted into positively corresponding slots 130 like it is demonstrated in detail enlargement A. Thereby the sensors 120, 121, 122 and 123 can be battery-powered sensors, which are designed as active transponders. It is also possible, that the sensors 120, 121, 122 and 123 are equipped with an apparatus 140 for infrared communication and communicate by infrared impulse with the sensor data analyzing apparatus 140. Finally, the sensors can also comprise an apparatus for radio communication by radio waves with the data analyzing apparatus 140, whereby a BlueTooth®-set-up would be possible for a protocol. In preferred embodiment of the invention it can be provided for that the sensors 120, 121, 122 and 123 comprise a piezo element 135, which absorbs the kinetic energy of a pressure wave entered by a projectile 200 into the dummy 101. The piezo crystal converts the pressure pulse into a short voltage pulse that is sufficient to charge a condenser within the electronics of the sensor 120, 121, 122 and 123. The stored electrical energy within the condenser will then be sufficient for a very short period of time, that the sensor 120, 121, 122 and 123 sends its identification number at the moment of measuring the pressure pulse. This identification number will then be received by the data analyzing apparatus 140 and the precise time with a higher resolution than $1\mu s$ together with the identification number, that has been allocated a three-dimensional location internally, will be stored temporarily in the data analyzing apparatus 140. The placement of the sensors, it should be at least four sensors, should be in a way that the preferred target regions of the human body are covered by a swarm of sensors belonging together. The swarm belonging together has the capacity each to detect a pressure wave of the zeroth order (no reflection at a phase interface), before an echo by reflection of the pressure wave reaches the respective sensor again.

In order that preferably no damage of the sensors occurs while under fire, the sensors 120, 121, 122 and 123 are manufactured as flat disks and inserted radially into the torso 102 and the head 108. Because of the radial arrangement, the sensors manufactured as flat disks are rarely hit while under ordinary fire. Only in case of grazing shots, a sensor could be hit by a projectile. In this case, the sensor would have to be replaced by a new sensor with an identical identification number or with a known new identification number.

In **figure 4a** the differently shaped sensors 120, 121, 122 and 123 shown, that are shaped similarly as the components of an insertion game. The diverse design helps the personnel, which is possibly under time pressure and emotional stress in a training situation, not to confuse the sensors. With a color encoding, the allocation of pre-fabricated sensors to predetermined identification numbers can be even further facilitated.

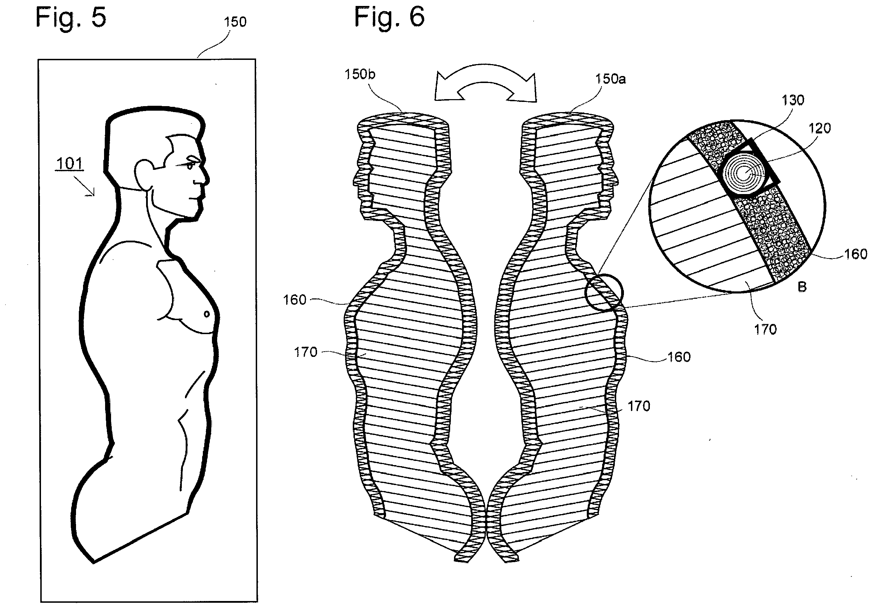

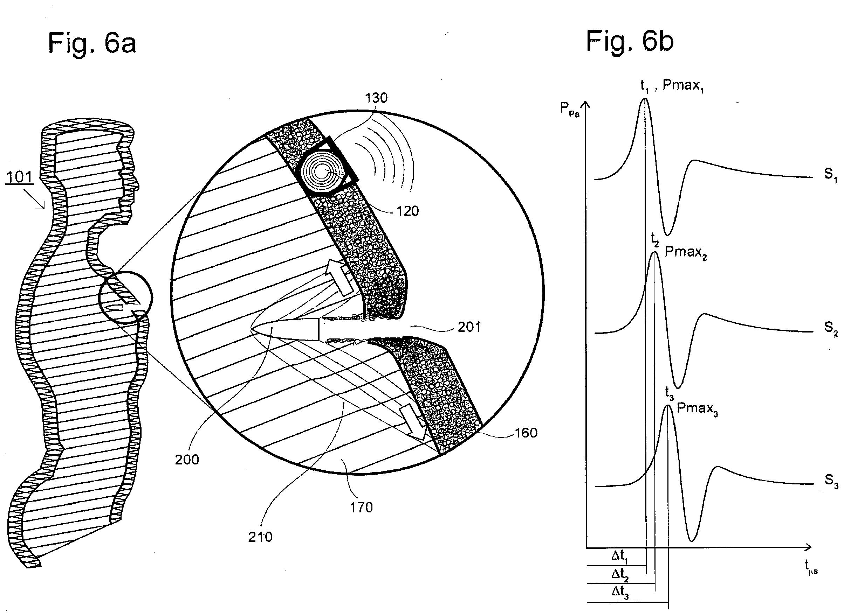

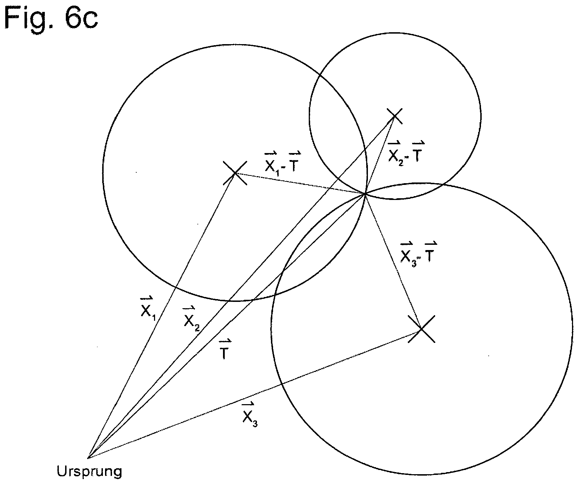

In **figure 5** the sagittal section 150 through the dummy 101 consisting of torso 102 and head 108 is shown. A dummy 101 cut open in this section plane presents the picture displayed in **figure 6** when both dummy halves 150a and 150b are unfolded. Torso 102 as well as head 108 has a side strength of approx. 3 cm to approx. 10 cm. For instance, the side 160 of torso 102 and head 108 are made of polyurethane foam or foamed vinyl natural rubber that comprises a rubbery to leathery consistency in the form at the phase interface due to heat treatment during casting. Thereby, the phase interface of the dummy 101 has a side strength of approximately 0.3 mm to 1.5 mm. Between both phase interfaces, the polyurethane foam or the vinyl natural rubber (here as exemplary, elastic foams) is developed by appropriate softening agents as a rather tough and elastic foam material. For a number of advantages, the dummy 101 in special version is filled with a gel 170 that has the consistency of paste-like lubricating grease or the consistency of undissolved soft soap. Thereby the gel can actually also consist of industrial mineral grease, actually of soft soap, of acrylate gel welled in water or of weakly crosslinked organic polymers welled in water or solvents when appropriate. Also soft wax is suitable when softened with solvents, mineral grease or oil. The gel filling leads to a higher energy intake of the dummy 101 from the projectile, permits a more precise detection of the pressure wave by the sensors, permits the masking of transversal waves and longitudinal waves, leads to a stronger dampening of the pressure wave and also leads to a more realistic picture of the movement of the dummy 101 when hit by the projectile. Finally the sound of the hit becomes more realistic. In detail enlargement A it is shown, how a sensor 120 sticks in a slot within the side of the dummy 101 assembled from torso 102 and head 108. Thereby the sensor 120 has been absorbed into the tough and elastic foam material of the dummy 101.

A hit of the dummy 101 by a projectile 200 is displayed in **figure 6a.** In detail enlargement B it is shown, how the projectile 200 pierces the side 160 of the dummy 101 consisting for instance of polyurethane foam and in doing so pierces the gel filling as well, which forms a tunnel 201 in the moment of the hit. However, this closes again a short time after the hit. Within the gel 170, a pressure wave 210 expands at the piercing by projectile 200, which expands circular in the direction of the arrow (the directions of the arrows indicate two radial directions in relation to the projectile trajectory). The pressure wave 210 around the trajectory of the projectile 200 moving along forms a cone around the trajectory probably determined by the ballistics of the projectile and probably bent as well and hits the different sensors 120, 121, 122, 123 at different times. At the moment of the detection of the pressure impulse, the sensor 120 sends a signal to a data analyzing apparatus 140. From the different points in time when the pressure wave 210 is detected at the different sensors 120, 121, 122, 123 with known set-up and therefore known location, the point of entry can be determined by triangulation within the data analyzing apparatus 140.

For detection of the point of entry of the projectile on dummy 101, in **figure 6b** the pressure pulse diagram picturing pressure P in Pa and the time t in $\mu$s, for the three sensors $S_1$, $S_2$ and $S_3$ is shown, which all register at a slightly different point in time $t_1$, $t_2$ and $t_3$ a very similar pressure pulse signal $Pmax_1$, $Pmax_2$ and $Pmax_3$. The various slightly different points in time $t_1$, $t_2$ and $t_3$ have to be traced back to the different running times of the pressure wave expanding through the gel. It has to be indicated at this point, that a detection also works with an air filled dummy 101 and with a dummy 101 made of full-foam material. It is important, to keep the number of phase interfaces with a large difference in density low. A totally homogeneous material would be ideal or the existence of material boundaries with a very large difference in damping performance.

For computation of the point of entry $\vec{T}$ in **figure 6c** as vector with the coordinates ($x_T$, $y_T$, $z_T$) the following equation is solved:

$$( \vec{X}_1 + \vec{\vartheta} * \Delta t_1 ) - ( \vec{X}_2 + \vec{\vartheta} * \Delta t_2 ) = ( \vec{X}_3 + \vec{\vartheta} * \Delta t_3 ) \qquad (1)$$

whereby

$\vec{X}_1$      stands for the fixed location of sensor 1,

$\vec{X}_2$      stands for the fixed location of sensor 2,

$\vec{X}_3$      stands for the fixed location of sensor 3,

$\vec{\vartheta}$      stands for the velocity of sound in vectorial form in the gel or in the filling of the dummy,

$\Delta t_1$      stands for $t_1 - t_0$ the time difference between point in time $t_0$ of the point of entry and point in time $t_1$ of the arrival of the pressure wave at sensor 1,

$\Delta t_2$      stands for $t_2 - t_0$ the time difference between point in time $t_0$ of the point of entry and point in time $t_2$ of the arrival of the pressure wave at sensor 2,

$\Delta t_3$      stands for $t_3 - t_0$ the time difference between point in time $t_0$ of the point of entry and point in time $t_3$ of the arrival of the pressure wave at sensor 3, whereby $t_0$, thus the exact time of the point of entry thus also the direction of the unit vector in $\vec{\vartheta}$ in are initially unknown.

Solving the equation (1) for $t_0$ results in:

$$t_0 = -[\vec{X}_1 - \vec{X}_2 - \vec{X}_3 + |\vec{\vartheta}| * (t_1 - t_2 - t_3)]/|\vec{\vartheta}| \qquad (2)$$

By replacing the unknown $t_0$ with the term (2) and the solving of equation 1, the point of entry $\vec{T}$ can be found because there is just one location $\vec{T}$ where the equation (1) is satisfied. When solving the equation (1), the respective directional component of the unit vector $\vec{\vartheta}$ has to be varied for each incidence within the equation. This still simple process is suitable for the detection of a vertical hit on a flat location of the dummy neighboring to the sensors $S_1$, $S_2$ and $S_3$. Already with an oblique point of entry it has to be considered, that the pressure wave cone around the projectile changes with the direction of the trajectory: To compute the location of an oblique point of entry correctly, sensor data of further sensors are necessary. In this case during evaluation, the geometric form and the alignment of the pressure wave cone has to be observed, which depending on the angle of the point of entry at an identic location can lead to different chronological sequences of the impact of the pressure wave at one sensor each. If there is a plurality of sensor data, the location of the point of entry and the trajectory can be computed under the assumption of a linear expansion of the projectile within the dummy. Depending on the complexity of the calculation model it is even possible, like with the evaluation of the signals of an echo sounder for a structural survey of the ocean floor, to determine precise data on the point of entry of the projectile, direction of trajectory of the projectile and with the corresponding cost even the alignment of the projectile, when the projectile precesses during impact or ricochets.

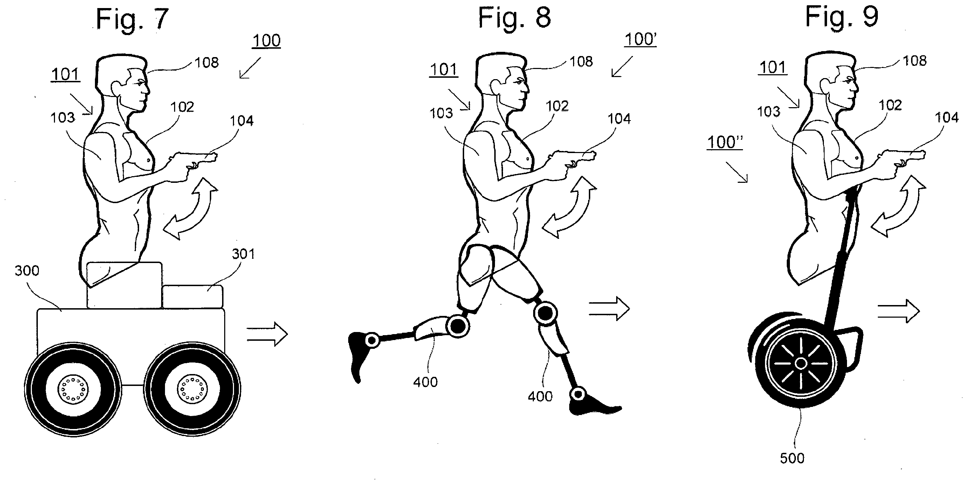

In **figure 7** the dummy 101 consisting of torso 102 with a head 108 mounted on an armored small vehicle 300 presented as movable target 100, whereby the dummy comprises a movable right arm 103 holding a dummy weapon 104. This version of the movable target is well suited for flat terrain and has the advantage that a battery with a high capacity can be carried along on board of the movable target. For the evaluation of the sensor data a sensor data analyzing apparatus 301 is on board.

In **figure 8** the dummy 101 consisting of torso 102 and head 108 is displayed as a movable target 100' on autonomously running robotic legs 400, whereby the dummy comprises a movable right arm 103 holding a dummy weapon 104. The advantage of this version of the movable target is the extreme manoeuverability and cross-country capability. However, the disadvantage of the use of this technology is the still quite high vulnerability of such robotic legs 400, which can easily be damaged during exercises including fire exercises. Although armoring is possible, it decreases the agility of the robotic legs.

Finally, in **figure 9** an example of the dummy 101 is displayed on a single-axle vehicle 500 as movable target 100", whereby the dummy comprises a movable right arm 103 holding a dummy weapon 104. The single-axle vehicle 500 has got a straightening apparatus not described in more detail and with this keeps the dummy 101 consisting of torso 102 and head 108 always in balance. Such vehicles are readily available on the registration date of this registration and these single-axle vehicles 500 comprise a very high manoeuverablility, which makes a single-axle vehicle useable in urban warfare situations as well. However, the disadvantage is an unnatural swaying movement of the dummy 101 in case of sudden direction changes of the single-axle vehicle 500.

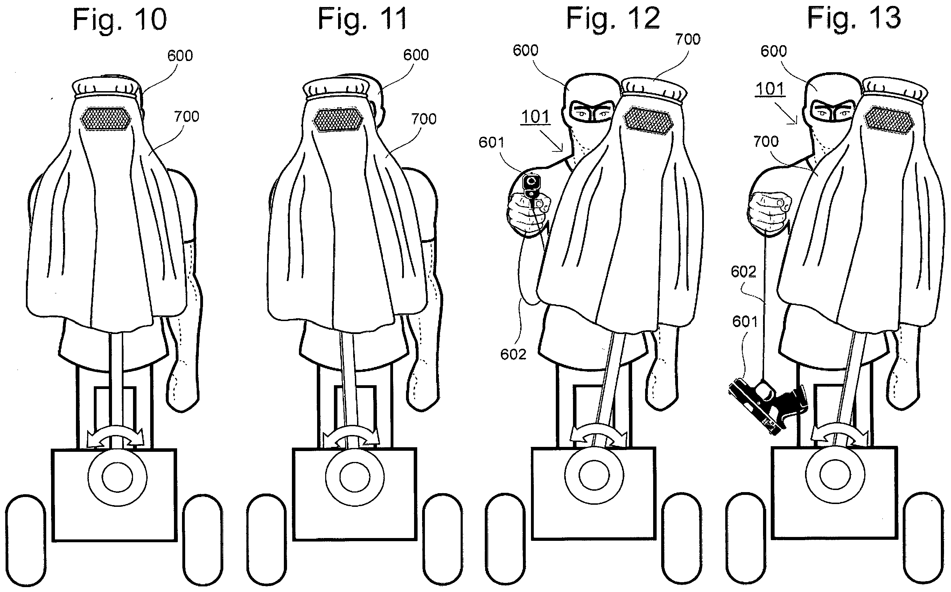

The illustrations **figure 10, figure 11, figure 12** and **figure 13** show a typical hostage situation in a row, whereby the target person 600 portrayed by the dummy 101 abuses a hostage, portrayed by the hostage dummy 700, as a human shield. In illustration 10 the target person 600 portrayed by the dummy 101 is not visible for the sniper in training at all. The hostage dummy 700 constructed as target disk or three-dimensional shell can be moved motor driven and it can for instance swivel back and forth in front of the dummy 101 consisting of torso 102 and head 108 remotely triggered or controlled by a program. Thereby, as displayed in illustration 11, the target person 600 portrayed by the dummy 101 might be only partially visible. Only when pivoting away, like shown in **figure 12**, it becomes discernible for the sniper in training that the target person 600 portrayed by the dummy 101 holds up a dummy weapon 601 aiming. Depending upon further circumstances, this situation would make an aimed shot on the target person 600 portrayed by the dummy 101 justifiable and possibly necessary. However, this situation in illustration 12 changes within fractions of seconds, when the target person 600 portrayed by the dummy 101 suddenly drops the dummy weapon 601. In illustration that is shown in form of a dummy weapon 601 hanging on a halyard 602.

*LIST OF REFERENCE SIGNS*

| | | | |
|---|---|---|---|
| 10 | target | 135 | piezo element |
| 11 | target | 140 | sensor data evaluating apparatus |
| 12 | torso | | |
| 13 | vehicle | 150 | level of sagittal section |
| 100 | target | 150a | dummy half |

(continued)

| | | | |
|---|---|---|---|
| 100' | target | 150b | dummy half |
| 100" | target | 160 | side |
| 101 | dummy | 170 | gel |
| 102 | torso | 200 | projectile |
| 103 | arm | 201 | tunnel |
| 104 | dummy weapon | 210 | pressure wave |
| 105 | sensors | 300 | small vehicle |
| 106 | sensors | 301 | sensor data evaluating apparatus |
| 107 | grid | | |
| 108 | head | 400 | robotic legs |
| 113 | vehicle | 500 | single-axle vehicle |
| 120 | sensor | 600 | target person |
| 121 | sensor | 601 | dummy weapon |
| 122 | sensor | 700 | dummy hostage |
| 123 | sensor | A | detail enlargement |
| 130 | slot | B | detail enlargement |

**Claims**

1. Target (100, 100', 100"), comprising

   - at least one dummy (101) depicting at least one part of the human body, wherein the dummy (101) depicting at least one part of the human body comprises a plurality of sensors (105, 106, 120, 121, 122, 123), which communicate with a sensor data evaluating apparatus (140) for the registration of the sensors' (105, 106, 120, 121, 122, 123) data, **characterized in that**

   the sensor data evaluating apparatus (140) determines by mathematical correlation of points in time ($t_1$, $t_2$, $t_3$) of a maximum pressure ($Pmax_1$, $Pmax_2$, $Pmax_3$) from sensor data of the plurality of sensors (105, 106, 120, 121, 122, 123) the point of entry $(\vec{T})$ and the trajectory of a projectile (200) penetrating the dummy (101).

2. Target according to claim 1,
   **characterized in that**
   the plurality of sensors (105, 106, 120, 121, 122, 123) is communicating wirelessly with the sensor data evaluating apparatus (140), like for instance

   - by active or passive RFID transponder,
   - or communicate by a generic near field communication with the sensor data evaluating apparatus, like for instance
   - by infrared communication
   - or radio communication

3. Target according to claim 1 or 2,
   **Characterized in that**
   an arm (103) of the dummy (101) depicting at least one part of the human body comprises a fixture for the mounting of objects, like for example a dummy weapon (104, 601), approximately in the area of the hand mounted to the arm (103) whereby
   the fixture for the mounting of objects can drop an object picked up before by remote triggering, whereby
   the fixture for the mounting of objects can be controlled remotely.

4. Target according to one of the claims 1 to 3,
   **characterized in that**
   an arm (103) of the dummy (101) depicting at least one part of the human body is movable motor driven, whereby

the drive can be controlled remotely.

5. Target according to one of the claims 1 to 4,
   **characterized in that**
   an additional, second dummy (700) depicting at least one part of the human body, in the simplest case in form of a silhouette target, is positioned related to the first dummy (101) behind or in front of the first dummy (101) on the movable target, which for instance is movable motor driven by a lever or by a scissor gear,
   so that the first (101) and the second dummy (700) can either overlap or be positioned offset to each other whereby the drive can be controlled remotely.

6. Target according to one of the claims 1 to 5,
   **characterized in that**
   the sensors (105, 106, 120, 121, 122, 123) are essentially designed flat or disk-shaped and are aligned radially in relation of the body axis of the dummy (101) depicting at least one part of the human body, which implies are sticking with the small silhouette in a wall (160) of the exterior skin of the dummy (101), whereby
   sensors (105, 106, 120, 121, 122, 123) identical among each other are pre-configured by colour and shape for an easy exchange, so that a pre-configured sensor (105, 106, 120, 121, 122, 123) is only applicable at a point of the dummy (101) pre-determined for the pre-configured sensor (105, 106, 120, 121, 122, 123).

7. Target according to one of the claims 1 to 6,
   **characterized in that**
   comprises a device (113, 300, 400, 500) for unbound movement across a terrain, which

   - is a three- or four-wheeled, armoured small vehicle (113, 300),
   - is an armoured vehicle (500; single-axle vehicle) with two wheels arranged parallel on one axle with an straightening apparatus, or
   - a device (400) resembling two human legs, whereby the device (400) with the two legs performs a humanoid motion for movement.

8. Target according to one of the claims 1 to 7,
   **characterized in that**
   a control unit present within the target controls

   - the unbound movement across a terrain, and/or
   - the arm of the dummy, and/or
   - the fixture for the mounting of objects,

   whereby
   the control unit disposes of a pre-set repertoire motion patterns, which externally conform to the body language of typical emotions during a combat situation, like for instance a resting position to remain unrecognized, panic, aggression or flight, whereby
   the control unit is connected to additional, movable targets wirelessly through a central command device (client-server) or directly (peer-to-peer), whereby in case of a hit by a projectile with predetermined parameters, like for instance

   - a computed lethal shot,
   - a computed man-stopping shot,
   - a computed shot lethal with delay,

   the central control unit communicates the result of its own computations to the additional movable targets identical or similar in construction, based on which the additional movable targets show a changed motion pattern.

9. Target according to one of the claims 1 to 8,
   **characterized in that**
   the dummy (101) itself is made from polyurethane foam or vinyl rubber, which is compacted at the external surface, so that the surface has a rubbery or leathery quality, whereby
   locations for the sensors (105, 106, 120, 121, 122, 123) are button-hole like slots (130) within the outer surface of the dummy (101), whose inner form corresponds to the outer form of a preconfigured sensor (105, 106, 120, 121, 122, 123), whereby preferably the button-hole like slots (130) exhibit a colour marking.

10. Target according to one of the claims 1 to 8,
    **characterized in that**
    the dummy (101) exhibits approximately the density of a human body.

**Patentansprüche**

1. Ziel (100, 100', 100"), umfassend

   - mindestens eine Figur (101), die mindestens einen Teil des menschlichen Körpers darstellt, wobei

   die Figur (101), die mindestens einen Teil des menschlichen Körper darstellt, eine Vielzahl von Sensoren (105, 106, 120, 121, 122, 123) umfasst, die mit einer Sensordatenauswertungsvorrichtung (140) für die Registrierung der Daten der Sensoren (105, 106, 120, 121, 122, 123) kommunizieren,
   **dadurch gekennzeichnet, dass**
   die Sensordatenauswertungsvorrichtung (140) durch mathematische Korrelation von Zeitpunkten ($t_1$, $t_2$, $t_3$) eines Maximaldrucks ($Pmax_1$, $Pmax_2$, $Pmax_3$) aus Sensordaten der Vielzahl von Sensoren (105, 106, 120, 121, 122, 123) den Eintrittspunkt (T) und die Flugbahn eines Projektils (200), das in die Figur (101) eintritt, bestimmt.

2. Ziel nach Anspruch 1,
   **dadurch gekennzeichnet, dass**
   die Vielzahl von Sensoren (105, 106, 120, 121, 122, 123) drahtlos mit der Sensordatenauswertungsvorrichtung (140) kommuniziert, wie beispielsweise

   - durch aktiven oder passiven RFID-Transponder,
   - oder durch eine generische Nahfeldkommunikation mit der Sensordatenauswertungsvorrichtung kommuniziert, wie beispielsweise
   - durch Infrarotkommunikation
   - oder Funkkommunikation.

3. Ziel nach Anspruch 1 oder 2,
   **dadurch gekennzeichnet, dass**
   ein Arm (103) der Figur (101), die mindestens einen Teil des menschlichen Körpers darstellt, eine Halterung zum Befestigen von Objekten umfasst, wie beispielsweise eine Waffenattrappe (104, 601), ungefähr in dem Bereich des Arms, befestigt an dem Arm (103), wobei
   die Halterung zum Befestigen von Objekten ein Objekt, das zuvor aufgehoben wurde, durch Fernauslösen fallen lassen kann, wobei
   die Halterung zum Befestigen von Objekten ferngesteuert werden kann.

4. Ziel nach einem der Ansprüche 1 bis 3,
   **dadurch gekennzeichnet, dass**
   ein Arm (103) der Figur (101), die mindestens einen Teil des menschlichen Körpers darstellt, motorgetrieben beweglich ist, wobei
   der Antrieb ferngesteuert werden kann.

5. Ziel nach einem der Ansprüche 1 bis 4, **dadurch gekennzeichnet, dass**
   eine zusätzliche zweite Figur (700), die mindestens einen Teil des menschlichen Körpers darstellt, in dem einfachsten Fall in Form einer Kopfscheibe, relativ zu der ersten Figur (101) hinter oder vor der ersten Figur (101) an dem beweglichen Ziel befestigt ist, das beispielsweise motorgetrieben durch einen Hebel oder durch ein Scherengetriebe beweglich ist,
   so dass die erste (101) und die zweite (700) Figur sich entweder überlappen oder versetzt voneinander positioniert werden können, wobei
   der Antrieb ferngesteuert werden kann.

6. Ziel nach einem der Ansprüche 1 bis 5,
   **dadurch gekennzeichnet, dass**

die Sensoren (105, 106, 120, 121, 122, 123) im Wesentlichen flach oder scheibenförmig entworfen sind und radial in Bezug auf die Körperachse der Figur (101), die mindestens einen Teil des menschlichen Körpers zeigt, ausgerichtet sind, was impliziert, sie haften mit der kleinen Silhouette in einer Wand (160) der Außenhaut der Figur (101), wobei Sensoren (105, 106, 120, 121, 122, 123) untereinander identisch durch Farbe und Form für einen einfachen Austausch vorkonfiguriert sind, so dass ein vorkonfigurierter Sensor (105, 106, 120, 121, 122, 123) nur an einem Punkt der Figur (101) für den vorkonfigurierten Sensor (105, 106, 120, 121, 122, 123) anwendbar ist.

**7.** Ziel nach einem der Ansprüche 1 bis 6,
**dadurch gekennzeichnet, dass**
es eine Vorrichtung (113, 300, 400, 500) für ungebundene Bewegung über ein Gelände umfasst, die

- ein drei- oder vierrädriges, gepanzertes Kleinfahrzeug (113, 300) ist,
- ein gepanzertes Fahrzeug (500; einachsiges Fahrzeug) mit zwei Rädern ist, die parallel auf einer Achse mit einer Richtvorrichtung angeordnet sind, oder
- eine Vorrichtung (400) ist, die zwei menschlichen Beinen ähnelt, wobei die Vorrichtung (400) mit den beiden Beinen humanoide Bewegung für Fortbewegung durchführt.

**8.** Ziel nach einem der Ansprüche 1 bis 7,
**dadurch gekennzeichnet, dass**
eine Steuereinheit, die innerhalb der Zielsteuerungen präsent ist,

- die ungebundene Bewegung über ein Gelände, und/oder
- den Arm der Figur, und/oder
- die Halterung zum Befestigen von Objekten,

wobei die Steuereinheit über ein voreingestelltes Repertoire an Bewegungsmustern verfügt, die extern der Körpersprache typischer Emotionen während einer Gefechtssituation entsprechen, wie beispielsweise einer Ruheposition, um unerkannt zu bleiben, Panik, Aggression oder Flucht, wobei
die Steuereinheit mit zusätzlichen, beweglichen Zielen drahtlos durch eine zentrale Befehlsvorrichtung (Client-Server) oder direkt (Peer-to-Peer) verbunden ist, wobei
im Fall eines Treffers durch ein Projektil mit vorbestimmten Parametern, wie beispielsweise

- ein berechneter tödlicher Schuss,
- ein berechneter Schuss mit Mannstoppwirkung,
- ein berechneter tödlicher Schuss mit Verzögerung,

die zentrale Steuereinheit das Resultat ihrer eigenen Berechnungen an die zusätzlichen beweglichen Ziele, die von der Konstruktion identisch oder ähnlich sind, basierend darauf, welche der zusätzlichen beweglichen Ziele ein verändertes Bewegungsmuster aufweisen, kommuniziert.

**9.** Ziel nach einem der Ansprüche 1 bis 8,
**dadurch gekennzeichnet, dass**
die Figur (101) selbst aus Polyurethanschaum oder Vinylkautschuk hergestellt ist, der an der externen Fläche verdichtet ist, so dass die Fläche eine gummiartige oder ledrige Qualität aufweist, wobei
Stellen für die Sensoren (105, 106, 120, 121, 122, 123) knopflochartige Schlitze (130) innerhalb der äußeren Fläche der Figur (101) sind, deren innere Form der äußeren Form eines vorkonfigurierten Sensors (105, 106, 120, 121, 122, 123) entspricht, wobei vorzugsweise die knopflochartigen Schlitze (130) eine Farbmarkierung aufweisen.

**10.** Ziel nach einem der Ansprüche 1 bis 8,
**dadurch gekennzeichnet, dass**
die Figur (101) ungefähr die Dichte eines menschlichen Körpers aufweist.

**Revendications**

**1.** Cible (100, 100', 100"), comprenant :

- au moins un mannequin (101) représentant au moins une partie du corps humain,

le mannequin (100) représentant au moins une partie du corps humain comprenant une pluralité de capteurs (105, 106, 120, 121, 122, 123) qui communiquent avec un appareil d'évaluation de données de capteurs (140) pour l'enregistrement des données de capteurs (105, 106, 120, 121, 122, 123), **caractérisée en ce que**

l'appareil d'évaluation des données de capteurs (140) détermine par corrélation mathématique de points dans le temps ($t_1$, $t_2$, $t_3$) d'une pression maximale ($Pmax_1$, $Pmax_2$, $Pmax_3$), à partir des données de capteurs de la pluralité de capteurs (105, 106, 120, 121, 122, 123), le point d'entrée (T) et la trajectoire d'un projectile (200) pénétrant dans le mannequin (101).

2. Cible selon la revendication 1,
**caractérisée en ce que**
la pluralité de capteurs (105, 106, 120, 121, 122, 123) communiquent sans fil avec l'appareil d'évaluation de données de capteurs (140), comme par exemple

   - par un transpondeur RFID actif ou passif,
   - ou communiquent par une communication de champ proche générique avec l'appareil d'évaluation de données de capteurs, comme par exemple
   - par communication infrarouge
   - ou communication radio.

3. Cible selon la revendication 1 ou 2,
**caractérisée en ce**
**qu'**un bras (103) du mannequin (101) représentant au moins une partie du corps humain comprend un support de montage d'objets, comme par exemple une arme du mannequin (104, 601), approximativement dans la zone de la main montée sur le bras (103),
le support de montage d'objet pouvant faire tomber un objet ramassé auparavant par télé-déclenchement,
le support pour le montage de l'objet pouvant être télécommandé.

4. Cible selon l'une quelconque des revendications 1 à 3,
**caractérisée en ce**
**qu'**un bras (103) du mannequin (101) représentant au moins une partie du corps humain est mobile par entraînement motorisé,
l'entraînement pouvant être télécommandé.

5. Cible selon l'une quelconque des revendications 1 à 4,
**caractérisée en ce**
**qu'**un second mannequin supplémentaire (700) représentant au moins une partie du corps humain, dans le plus simple des cas sous la forme d'une cible en silhouette, est positionné par rapport au premier mannequin (101) derrière ou devant le premier mannequin (101) sur la cible mobile qui est par exemple entraînée par commande motorisée par un levier ou par un engrenage à ciseaux, de sorte que le premier (101) et le second mannequin (700) peuvent soit se chevaucher, soit être positionnés décalés l'un de l'autre,
l'entraînement pouvant être télécommandée.

6. Cible selon l'une quelconque des revendications 1 à 5,
**caractérisée en ce que**
les capteurs (105, 106, 120, 121, 122, 123) sont substantiellement conçus en forme plate ou de disques et sont alignés radialement par rapport à l'axe corporel du mannequin (101) représentant au moins une partie du corps humain, ce qui implique qu'ils adhèrent sur la petite silhouette dans une paroi (160) de la peau extérieure du mannequin (101),
les capteurs (105, 106, 120, 121, 122, 123) identiques les uns aux autres étant préconfigurés par la couleur et la forme pour un échange facile, de sorte qu'un capteur préconfiguré (105, 106, 120, 121, 122, 123) n'est applicable qu'à un point du mannequin (101) prédéterminé pour le capteur préconfiguré (105, 106, 120, 121, 122, 123).

7. Cible selon l'une quelconque des revendications 1 à 6,
**caractérisée en ce**
**qu'**elle comprend un dispositif (113, 300, 400, 500) permettant un mouvement délié à travers un terrain et qui

   - est un petit véhicule blindé à trois ou quatre roues (113, 300),
   - est un véhicule blindé (500 ; véhicule à essieu unique) à deux roues disposées parallèlement sur un essieu avec un appareil de raidissement, ou

- est un dispositif (400) ressemblant à deux jambes humaines, le dispositif (400) doté des deux jambes exécutant un mouvement humanoïde pour le mouvement.

8. Cible selon l'une quelconque des revendications 1 à 7,
   **caractérisée en ce**
   **qu'**une unité de commande présente dans la cible commande

   - le mouvement délié à travers un terrain, et/ou
   - le bras du mannequin et/ou
   - le support pour le montage d'objets,

   l'unité de commande disposant de modèles de mouvement de répertoire préétablis qui se conforment à l'extérieur au langage corporel d'émotions type pendant une situation de combat, comme par exemple une position de repos pour rester inaperçu, la panique, l'agression ou un objet volant,
   l'unité de commande étant connectée sans fil à des cibles mobiles supplémentaires par un dispositif de commande centralisé (serveur de client) ou directement (de pair à pair), sachant que, en cas d'atteinte par un projectile à paramètres prédéterminés, comme par exemple

   - un tir létal informatisé,
   - un tir informatisé immobilisant un homme,
   - un tir létal informatisé avec retardement,

   l'unité de commande centralisée communique le résultat de ses propres calculs aux cibles mobiles supplémentaires de conception identique ou similaire, en fonction des cibles mobiles supplémentaires qui présentent un modèle de mouvement modifié.

9. Cible selon l'une quelconque des revendications 1 à 8,
   **caractérisée en ce que**
   le mannequin (101) lui-même est composé de mousse de polyuréthane ou de caoutchouc vinylique qui est compacté au niveau de sa surface extérieure, de sorte que la surface a une qualité caoutchouteuse ou ressemblant à du cuir, les emplacements destinés aux capteurs (105, 106, 120, 121, 122, 123) étant des fentes en forme de trous de boutons (130) pratiquées dans la surface extérieure du mannequin (101) et dont la forme intérieure correspond à la forme extérieure d'un capteur préconfiguré (105, 106, 120, 121, 122, 123), les fentes en forme de trous de boutons (130) présentant de préférence un marquage coloré.

10. Cible selon l'une quelconque des revendications 1 à 8,
    **caractérisée en ce que**
    le mannequin (101) présente approximativement la densité d'un corps humain.

Fig. 1

STAND DER TECHNIK

Fig. 2

STAND DER TECHNIK

# Fig. 3

# Fig. 4

# Fig. 4a

Fig. 5

Fig. 6

# Fig. 6a

# Fig. 6b

Fig. 6c

Ursprung

Fig. 7

Fig. 8

Fig. 9

Fig. 10     Fig. 11     Fig. 12     Fig. 13

EP 3 504 506 B1

**EP 3 504 506 B1**

**REFERENCES CITED IN THE DESCRIPTION**

**Patent documents cited in the description**

- EP 2040025 A1
- WO 2011035363 A1
- US 20140356817 A1